# EUROPEAN PATENT SPECIFICATION

(11) **EP 1 521 694 B1**
(45) Date of publication and mention of the grant of the patent: **02.07.2008**
(21) Application number: 03764004.2
(22) Date of filing: 16.07.2003
(51) Int. Cl.: B60S 1/08

(54) **RAIN DETECTION APPARATUS AND METHOD**
REGEN-ERKENNUNGSVORRICHTUNG UND -VERFAHREN
APPAREIL ET PROCEDE DE DETECTION DE PLUIE

(30) Priority: 16.07.2002 GB 0216483
(43) Date of publication of application: 13.04.2005
(73) Proprietor: TRW Limited, Solihull, West Midlands B90 4AX (GB)
(72) Inventor: HEENAN, Adam John, Sheffield S26 4UH (GB); HAZELDEN, Roger John, Tamworth, Staffordshire B77 4PL (GB); THOMPSON, Martin, John, Birmingham B14 4LE (GB); BUCHANAN, Alastair James, Sutton Coldfield, West Midlands B72 1AL (GB)
(74) Representative: Tranter, Andrew David
(86) International application number: PCT/GB2003/003061
(87) International publication number: WO 2004/007255

(56) References cited:
- WO-A-99/44173
- GB-A- 2 311 602
- US-A- 6 097 024
- US-B1- 6 396 397

## Description

This invention relates to rain detection apparatus and method. In particular but not exclusively, it relates to a vehicle window cleaning apparatus. It also relates to a vehicle fitted with such an apparatus.

In one known situation, it has long been desired to automatically sense the condition of a vehicle window in order to activate vehicle window cleaning apparatus. An example would be to automatically activate the wipers and/or washers of a car's window (commonly referred to as a windscreen or windshield) should the window become rained upon or should it become otherwise obscured by dust, dirt or debris.

Prior art solutions to the problem have generally used infra red sensors or sensors of the visible yellow type mounted on the appropriate window. However, these only sense the condition of a limited area of window and require close association with the window, which can cause problems should the window need replacing.

As well as cleaning of vehicle windows, it is also desirable to provide for the automatic cleaning of many other surfaces where obscuring media such as rain drops, dirt or debris on the surface would cause problems if it obscures the view through the surface. An example would be the glass or plastic lens of a headlamp or other light of a vehicle.

We are aware of the United Kingdom Patent Application published as GB 2 311 602A and US Patent No. 6 097 024, both of which disclose a video sensing system which uses information from captured images to determine whether rain is present on a windscreen.

According to a first aspect of the invention there is provided a rain detection apparatus according to claim 1.

By rain, we may include fog, mist, spray, drizzle and other forms of moisture or obscurating media that may form, fall or otherwise be incident upon the surface.

The apparatus may be adapted to capture images at a plurality of distances. In a particularly advantageous embodiment where the surface is a part of a vehicle, the apparatus may be adapted to sense the location of other vehicles or of lane markings on a road in which the vehicle to which the system is fitted is situated. In such an embodiment, the camera may be adapted to be focussed at a plurality of distances. One of these distances may correspond to viewing the vehicle window and another to viewing the road ahead of the vehicle. Accordingly, the camera may be provided with a bi-focal lens, or a multi-focal lens. Alternatively, the camera may, in use, continually change focus, or a focussing mirror may be used or other means of achieving a dual focus system may be provided. The camera may be adapted to focus on the surface over a first region of its field of view, and the road over a second region of its field of view.

Combining lane and vehicle detection apparatus with the apparatus herein described is especially advantageous as both use the same hardware and even elements of the same software and so use of such can be shared.

The surface may comprise a window, a window of a vehicle or perhaps a surface of a lamp such as a vehicle headlight. Such a system has the advantages that it requires no contact with the surface, it can work with visible light and can easily be adapted to sense any area of the window desired. In fact, it is preferable for the camera not to be in contact with the surface.

The surface may be the front window of the vehicle, commonly known as the windscreen or windshield of the vehicle. Equally, it may be the rear window or any other window.

The apparatus may be adapted to control a vehicle window cleaning apparatus adapted to clean the surface, which may comprise one or more wipers, which wipe the surface of the vehicle window, preferably at an adjustable speed. The vehicle window cleaning apparatus may also comprise one or more washers, whereby washer fluid (perhaps water, possibly with added detergent or anti-freeze) can be sprayed onto the surface of the vehicle window.

The surface may be a cover or lens of a vehicle light such as a headlight. In this case, a camera may be provided inside the headlight behind the cover or lens.

The system may be provided with fault warning means such as a lamp or a sounder, which are adapted to alert a user of the system should a fault condition occur.

The processor may include edge detection means adapted to detect edges visible in the at least one captured image. This may be performed by calculating the spatial rate of change of pixel intensity in each of the at least one image. The spatial rate of change may only be calculated in one, preferentially horizontal, direction. Accordingly, vertical edges would be thereby detected. This may be performed by convolving the image, typically with a Sobel-like mask or other suitable mask. The position of the edges may be determined as the positions at which the spatial rate of change exceeds a prescribed threshold. An example of a suitable edge detection technique is taught in WO 99/44173 in which the edges of lanes on a highway are detected.

The processor may also include counting means whereby the number of detected edges in the, or each, captured image may be counted. This may give an indication of the amount of rain on the vehicle window. In an alternative, the counting means may be adapted to count edges that are new compared with a previous image. Mask memory may be provided, which is adapted to record which edges are old, i.e. exist in the previous image, allowing the processor to determine which edges are new.

The apparatus may be provided with a backlight, arranged to illuminate the surface. The backlight may be adapted to cause any rain on the surface to be substantially more visible to the camera, for example by being mounted at an angle of less than 90° to the surface. The apparatus may be adapted such that rain is not visible to the camera without the backlight illuminated. This therefore allows successive images to be captured with and without the backlight illuminated. The backlight may comprise a plurality of individual illumination sources, or a single illumination source.

The processor may further comprise difference means adapted to calculate the difference between the number of edges visible between images captured with and without the backlight illuminated. This advantageously provides for the apparatus to be able to discern between background features such as the headlights of oncoming vehicles visible with or without the backlight illuminated and rain and suchlike only visible (or only detectable) with the backlight illuminated. Furthermore, only counting the number of edges in each image and then taking a difference requires the use of less memory than a frame subtraction technique, where individual elements (such as pixels or individual edges) of differing captured images are compared. It is also less prone to errors due the background of the images captured changing, as the position of the edges counted is irrelevant. The difference means may also subtract the number of edges due to specular reflection of the backlight from the number of edges detected. This may be a predetermined constant number.

The backlight may be adapted to illuminate the surface with visible or infrared light, and may illuminate the surface with a given range of frequencies. The processor may be adapted to control the activation of the backlight. The apparatus may further comprise a filter, typically an optical bandpass filter, which preferentially allows the range of frequencies to pass.

In an alternative to the masks discussed above, the mask with which the, or each, captured is convolved may be adapted to disregard edges close to areas of light larger than the largest raindrop that is desired or expected to be detected. The mask may therefore ignore edges due to the headlights of oncoming vehicles or specular reflection off the surface. The mask may comprise a central peak, and two troughs spaced on either side of the central peak in convolution space. The peaks and the troughs may be of non-zero width, and may be separated from one another by areas of mask having a value of zero, or substantially zero. The peaks and the troughs may be of opposite sign, and may each have linear rising and falling edges and an optional constant maximum absolute value of non-zero width in convolution space.

Use of this mask may mean that the results of convolving the, or each, captured image with the mask for an edge corresponding to a background feature such as an oncoming headlight or the specular reflection of the backlight off the surface are less significant than those for edges due to rain. The apparatus may therefore include thresholding means whereby any detected edges having a convolved value less than a predetermined threshold are not considered as edges.

The apparatus may be further adapted to detect the presence of mist on the surface. By mist, we may mean mist, for or other small radius drops of moisture. To this end, the processor may be adapted to calculate the difference in intensity of the captured image in the area around, but not including, the area of the image in which the specular reflection of the backlight is found, between images in which the backlight is illuminated and where it is not. The presence of a high difference in illumination has been determined to be indicative of the presence of mist (large amounts of non-specular reflection). The difference may be taken of the average intensities around the specular reflection of the backlight, or the difference itself may be averaged.

According to a second aspect of the invention there is provided a vehicle fitted with the surface cleaning apparatus control system of the first aspect.

According to a third aspect of the invention, there is provided a method of detecting the presence of obscurating material on a surface according to claim 17.

The surface may comprise a vehicle window, or perhaps a cover for a light of a vehicle such as a headlamp. The images captured may be specifically focussed on the vehicle window.

In a particularly advantageous embodiment, the method also includes detecting the positions of lanes or vehicles surrounding a vehicle from information contained in the at least one captured image. In such a case, the at least one captured image may be partially focussed on the vehicle window and partially elsewhere, for example on the road ahead of the vehicle. Alternatively, successive captured images may be focussed on the vehicle window for use in determining the condition of the vehicle window and elsewhere, for use in lane and vehicle detection.

The images may be captured at a rate of substantially 100, 50, 20, 10, 5, 2 or 1 per second, or every 1s, 2s, 5s or 10s. Equally, they may be captured at any suitable rate. The images may be captured at a fixed rate substantially between 1 to 100 per second or one image between for example 1 to 10 seconds. Optionally the capture rate may be varied in accordance with a prescribed operational parameter of the system such as vehicle speed when the invention is associated with a motor vehicle.

The images may be of substantially all or part of the surface to be sensed such as between 1% and 100% of the total surface. For example, they may be of at least 75%, 50%, 40%, 30%, 25% or 10%. The size may be determined so as to provide sufficient data for reliable processing.

The method may include the step of detecting edges visible in the images. This may include the step of calculating the spatial rate of change of pixel intensity in each of the images. The spatial rate of change may only be calculated in one, preferentially horizontal, direction. Accordingly, vertical edges would be thereby detected. This may be performed by convolving the image, typically with a Sobel-like mask. The position of the edges may be taken as the positions at which the spatial rate of change exceeds a predetermined threshold.

Alternatively, the mask may be adapted to disregard edges close to areas of light larger than the largest raindrop that is desired or expected to be detected. The mask may therefore ignore edges due to the headlights of oncoming vehicles or specular reflection off the surface. The mask may comprise a central peak, and two troughs spaced in convolution space therefrom. The peaks and the troughs may be of non-zero width, and may be separated from one another by areas of mask having a value of zero, or substantially zero. The peaks and the troughs may be of opposite sign, and may each have linear rising and falling edges and an optional constant maximum absolute value of non-zero width in convolution space.

Use of this mask may mean that the results of convolving the, or each, captured image with the mask for an edge corresponding to a background feature such as an oncoming headlight or the specular reflection of a backlight off the surface are less significant than those for edges due to rain. The method may therefore include the step of thresholding the convolved values such that edges having a convolved value less than a predetermined threshold are not considered as edges.

The edges detected may be those of raindrops. By raindrops, we may include fog, mist, spray, drizzle and other forms of moisture or obscurating media that may form, fall or otherwise be incident upon the surface.

The number of detected edges in each image may then be counted to give, for example, an indication of the amount of rain on the vehicle window. This may be referred to as an "edge counting" method. In an alternative, so-called "edge boundary masking" method, edges that are new compared with a previous image may be counted. In the case where there is no previous image, all detected edges may be counted as new. Preferably a running total of new edges is kept. A mask may be used to record which edges are new. With each image, the mask may be updated. Updating the mask may involve marking the areas around new edges as old. The area marked as old with each new image may be the new edges dilated by a predetermined amount.

These two alternatives provide two different ways to interpret the edges visible on the vehicle window. The first alternative is simple and requires little processing power whilst the second alternative is more able to cope with shifting raindrops and movement of background images. Furthermore, in the second alternative the number of new edges in each image may be used to determine the rate at which it is raining and the running total may be used to determine the amount of rain on the vehicle window.

The method may further comprise the step of taking the difference between the number of edges visible between images captured with and without a backlight illuminated. This advantageously provides for the method to be able to discern between background features such as the headlights of oncoming vehicles visible with or without the backlight illuminated and rain and suchlike only visible (or only detectable) with the backlight illuminated. Furthermore, only counting the number of edges in each image and then taking a difference requires the use of less memory than a frame subtraction technique, where individual elements (such as pixels or individual edges) of differing captured images are compared. It is also less prone to errors due the background of the images captured changing, as the position of the edges counted is irrelevant. The difference means may also subtract the number of edges due to specular reflection of the backlight on the surface from the number of edges detected. The number of edges due to specular reflection of the backlight on the surface may be a predetermined constant number.

The method may further include the step of controlling vehicle window cleaning apparatus according to the sensed vehicle window condition. Advantageously, the vehicle window cleaning apparatus may include one or more wipers, which wipe the vehicle window, or washers, which spray the vehicle window with fluid.

In a further development of the system, the average size and or density of the detected media may be further used to control the cleaning apparatus. In the case that the vehicle window cleaning apparatus is one or more wipers, such control may include calculating average raindrop size and density. The average size and density of raindrop may then be used to generate a signal indicative of the speed at which the wiper or wipers are to run. An intermediate factor may be calculated for each of the density and average raindrop size. These two factors may then be multiplied together to form a wiper control signal. Each factor may be between 0 and 1. Each factor may be zero below a first value of either average raindrop size or density respectively and 1 above a second value of average raindrop size or density respectively. Between first and second values, the factors may linearly increase with average raindrop size or density. The factors may increase from an initial factor value to a terminal factor value. Preferably, the initial factor value is between 0 and 1 and the terminal factor value is 1.

Accordingly, the wiper or wipers will only be operated should both average size and density of raindrops exceed certain limits, and will be limited to running at a maximum speed indicated by a wipe control signal of "1".

The limits at which wipers (or other cleaning apparatus) are operated may be adjustable, and may be controlled by a user such as a driver of a vehicle. This can also be applied with the basic edge detection method, with the number of edges that need to be obscured before cleaning being adjustable or otherwise user defined.

The vehicle window cleaning apparatus may be activated with no direct user interaction. This enables the user of a vehicle to concentrate on their driving or other such tasks without the need to directly operate the apparatus.

In the case where the amount of rain is determined by counting new edges, at least one of any running total and the mask may be reset when the vehicle window is cleared. This may be sensed by determining when the wiper or wipers have wiped the vehicle window. Alternatively, the total number of edges visible ignoring the mask may be counted and should a sudden decrease occur the vehicle window is considered cleared.

This step is included as the edge boundary masking method assumes that edges never disappear and hence the total number of edges always increases.

The amount of rain may be integrated over time, such that the amount of time that rain has been present on the surface is taken into account. The method may include the step of causing the surface to be cleaned when the integrated value exceeds a predetermined limit. This advantageously allows small amounts of rain to be wiped after a maximum amount of time.

Furthermore, the method may include determining whether at least one of dirt, dust, ice, frost and mist exist on the vehicle window. If one or more does, then appropriate steps such as activating the vehicle window cleaning apparatus, activating a vehicle window heater, activating a vehicle heater or activating a vehicle air conditioning system may be taken. The method may include reading the temperature external to the vehicle, typically with an onboard external temperature sensor of the vehicle. The method may therefore include activating the vehicle heater or demister in response to the measured temperature, preferably in combination with the detected window condition.

By mist, we may include haze, dew, fog or other small radius drops of moisture. To this end, the method may include the steps of calculating the difference in intensity of the captured image between images in which a backlight is illuminated and where it is not in the area around, but not including, the area of the image in which the specular reflection of the backlight is found. The presence of a high difference in illumination has been determined to be indicative of the presence of mist (large amounts of non-specular reflection). The difference may be taken of the average intensities around the specular reflection of the backlight, or the difference itself may be averaged.

Also, the method may include the step of detecting from the smear pattern visible on the vehicle window after a wipe has passed the condition of the wiper. This may involve a Hough transform of the smear pattern. Such smear patterns may also be used to indicate dirty water on the vehicle window and to take appropriate action. The system may be able to differentiate between rain, snow and ice.

The invention will now be described by way of example with reference to the accompanying drawings, in which:
**Figure 1** shows schematically a sensing system according to the present invention;
**Figure 2** shows an image captured by a video camera;
**Figure 3** is a flow chart depicting a first method of estimating the amount of rain on a windscreen;
**Figure 4** is a flow chart depicting a second method of estimating the amount of rain on a windscreen.
**Figure 5** is a graph showing the relationship between average raindrop size or density and the intermediate, scaled, value;
**Figure 6** shows the steps taken in calculating the wiper demand signal from the edge count out part;
**Figure 7** shows a mask for use in convolving the captured images;
**Figures 8a, 8b and 8c** show the effect of the presence of mist on the windscreen;
**Figure 9** shows a Frame Subtraction technique according to the prior art;
**Figure 10** shows an Edge Subtraction technique according to the present invention;
**Figure 11** shows the steps carried out in this method in common with a lane detection technique;
**Figure 12** shows the steps carried out in order to detect the presence of mist on the windscreen; and
**Figure 13** shows a wiper control strategy.

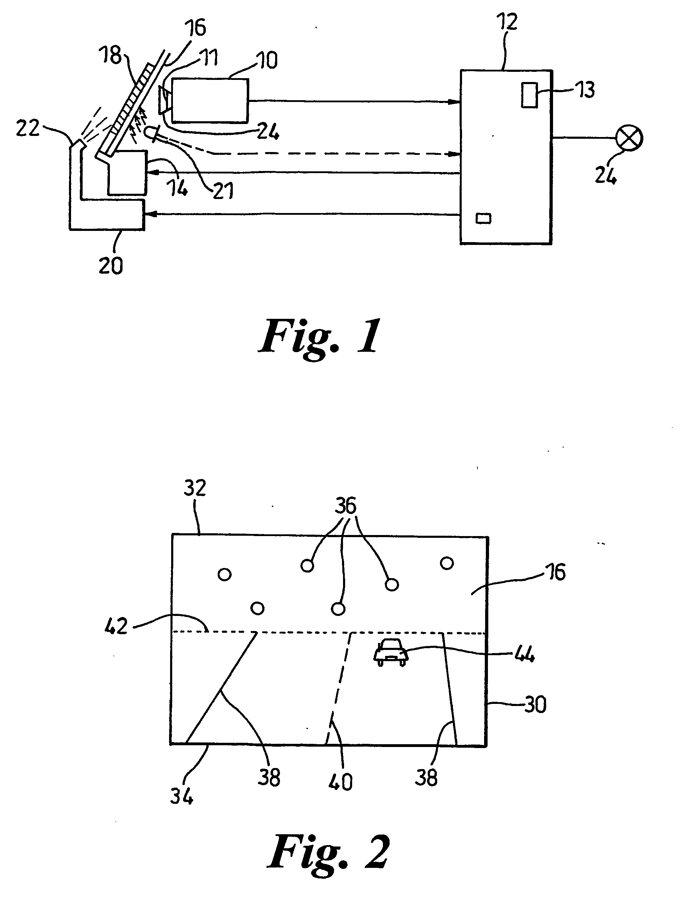

Figure 1 shows a sensing system according to the present invention. The system comprises a camera 10, which views the scene visible through a windscreen 16 of a car. The camera is connected to a processor 12, which is adapted to capture images from the camera 10. Also provided are wipers 18 (only one of which is shown in Figure 1) which are, as is common in the art, in the forms of arms, which can be driven in an arcuate path over the outer surface of windscreen 16 by wiper motor 14. Wiper motor 14 is responsive to signals generated by processor 12. Further provided is washer pump 20, which is optionally adapted to respond to signals generated by processor 12 to pump washer fluid (usually water, perhaps with detergent or anti-freeze additives) onto windscreen 16 through nozzles 22 at an appropriate safe time. The system is also provided with a fault warning light 24, which indicates the presence of a fault condition.

The signals which are generated by the processor 12 in order to control the actuation of wiper motor 14 and optionally the washer pump 20 are calculated at least partly in response to the images captured from the camera 10. These shall now be described hereinbelow for a more specific embodiment of the invention, which uses an edge detection algorithm to determine the amount of rain on the windscreen.

This embodiment also uses the apparatus described above. Camera 10 is mounted inside the body of a car on a mounting bracket (not shown) attached to the roof of the car. The camera views the scene in front of the car through the windscreen. The system, in addition to sensing rain on the windscreen, is adapted to sense the position of other vehicles and lane markings etc. In order to facilitate this, a bifocal lens 24 is fitted to camera 10. The images captured from the camera 10 are therefore split horizontally as exemplified in Figure 2.

An optional light source, such as IR/LED 21 aimed at back-lighting the windscreen may be provided. This may be enabled when detected or otherwise determined ambient light levels fall below a prescribed level. The effect or the use of the LED would be to highlight the edges of the obscurating media present on the image scene so as to enable the control system to perform more reliably. An optical bandpass filter 11 is also provided, which increases the dominance of the backlight wavelength against the background scene.

Figure 2 shows an example image 30 captured by the camera 10. The image 30 is split into a top part 32 and a bottom part 34, divided by a dividing line 42. This line 42 is not normally visible in the image but has been depicted for purposes of clarity. The top part 32 has been focussed on the outer surface of windscreen 16 on which raindrops 36 are visible. In the bottom part 34 of the image, the image has been focussed on the road ahead whereby features such as road edges 38, lane markings 40 and other vehicles 44 can be seen. The processor can then use any of the methods known in the prior art to calculate the position of these features. Unless specifically mentioned, when referring to the images we shall henceforth refer to the top part 32 of the captured images as the part relevant to the amount of rain on the windscreen.

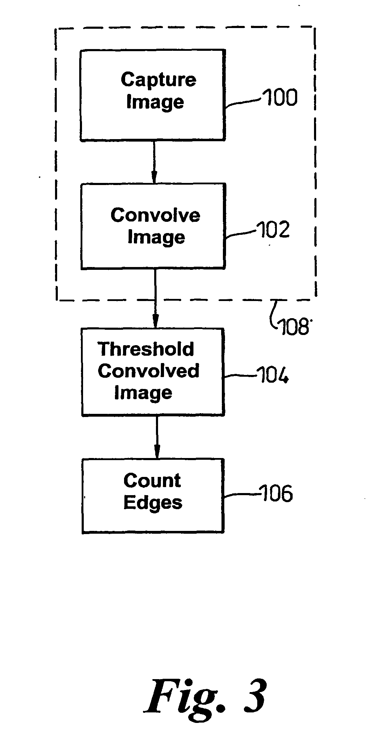

In order to calculate the need to wipe the windscreen 16 the steps of a first method, shown in Figure 3, are taken. Firstly, at step 100, the processor 12 periodically captures the top part 32 of images viewed through the camera 12. This occurs N times a second, although it is envisaged that it may be more or less frequent. By way of example only, N may be in the range 15 to 40 times a second.

The next step 102 is for the captured images to be convolved with a mask, such as a Sobel-like mask. The resultant values represent the spatial rate of change, in the horizontal direction, of the pixel intensity of the image. Taking a threshold 104 of these values (that is, determining the points in the image at which the convolved values exceed a predetermined value) then gives an indication of where the vertical edges of raindrops 36 lie.

This method of edge detection is used as it is commonly in use in lane and vehicle detection systems, such as is known from WO 99/44173.

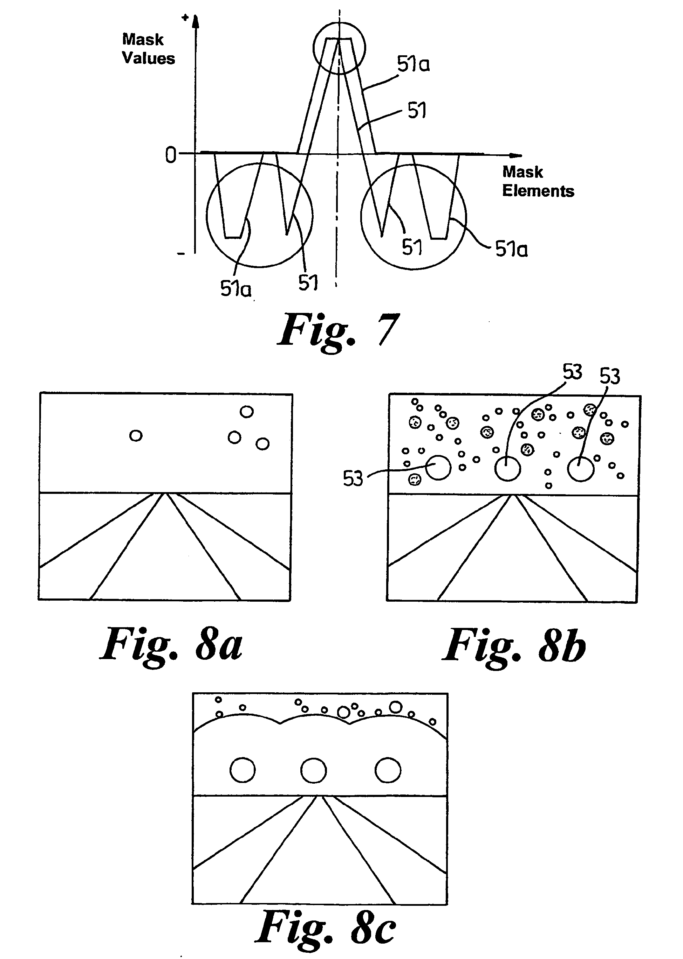

An alternative edge detection scheme replaces convolution with the Sobel-like mask with convolution with the mask 51 depicted in Figure 7 of the accompanying drawings. This consists of a central peak with two outer troughs to either side (in convolution space). The peaks and troughs have linear leading and rising edges and may have areas of constant value between them or at their absolute maxima. Convolution with this mask gives high values for edges, but edges that occur close to large areas of light are penalised. Accordingly, vehicle headlights and the specular reflection of the backlight 21 off the vehicle windscreen 16 are disregarded as not being raindrops. The width and position of the peaks (as in trace 51a of Figure 7 of the accompanying drawings) can be adjusted in order to tune the raindrop detection and headlight elimination characteristics.

However, the person skilled in the art will recognise that any suitable edge detection algorithm could be used.

In the next step 106, the number of edges is counted. This gives an indication of the amount of rain present on the windscreen 16 particularly where day and/or night screens are being viewed and where the glare from oncoming headlights would need to be accounted for. Use of multiple mask types, enables independence upon the prevailing ambient scene conditions to be complemented using a simple suitability logic.

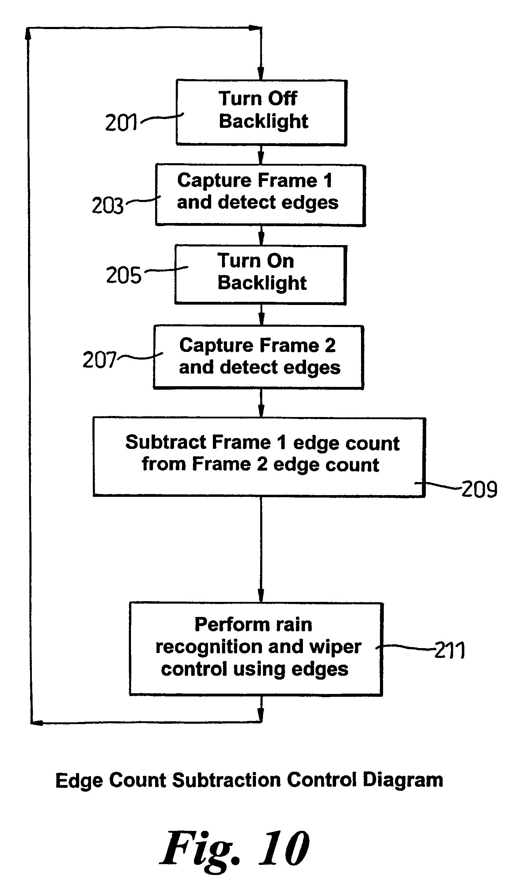

In an improvement to this step shown in Figure 10 of the accompanying drawings, the backlight 21 may be employed to increase the visibility of the edges of raindrops. The backlight 21, camera 10 and edge detection method can be arranged such that edges of raindrops are only detected when the backlight 21 is illuminated. Images are captured without 203 and with 207 the backlight 21 illuminated, and the number of edges in each of the images calculated. Images captured without the backlight illuminated will only show background details such as passing scenery and headlights of oncoming vehicles. Illuminated images will show the same features, plus highlighted raindrops and the specular reflection of the backlight in the windscreen. The number of edges for non-illuminated images then is subtracted 209 from the number of edges for the illuminated images. This value can be used to control 211 the wipers of the vehicle in the manner described below.

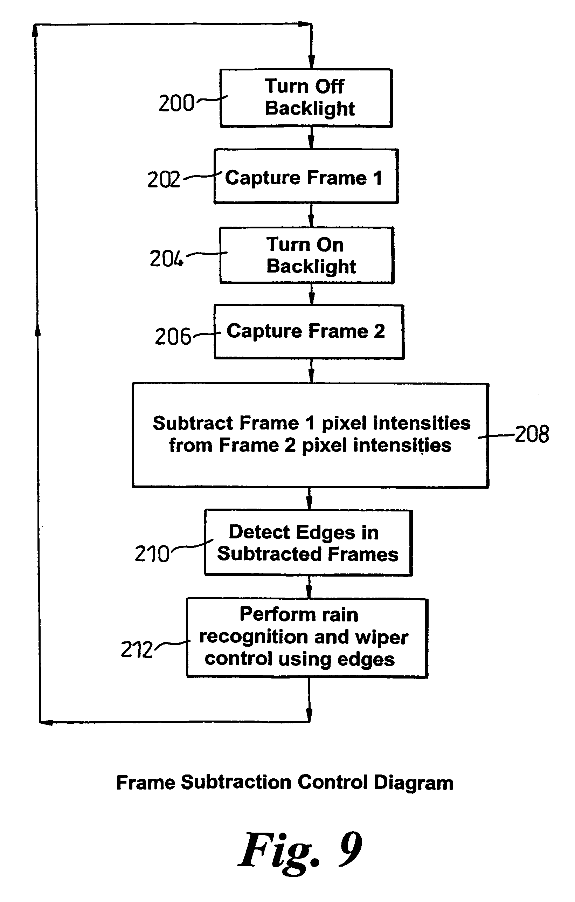

Accordingly, such artefacts as headlights and passing scenery can be accounted for without the complications and memory requirements of comparing frames, as in the prior art method shown in Figure 9 of the accompanying drawings. The prior art method requires frames to be captured without 202 and with 206 the backlight illuminated and the pixel values for each frame are subtracted from one another. Edges are detected 210 in the resultant image and wiper control 212 carried out from the determined number of edges. This requires much more memory and processor time than the method of Figure 10 of the accompanying drawings, as entire frames are compared rather than single numbers of edges.

If the specular reflection of the backlight has not been removed from the detected edges by the alternative mask 51, then these reflections can be accounted for by subtracting a further, predetermined amount from the number of edges for the illuminated images.

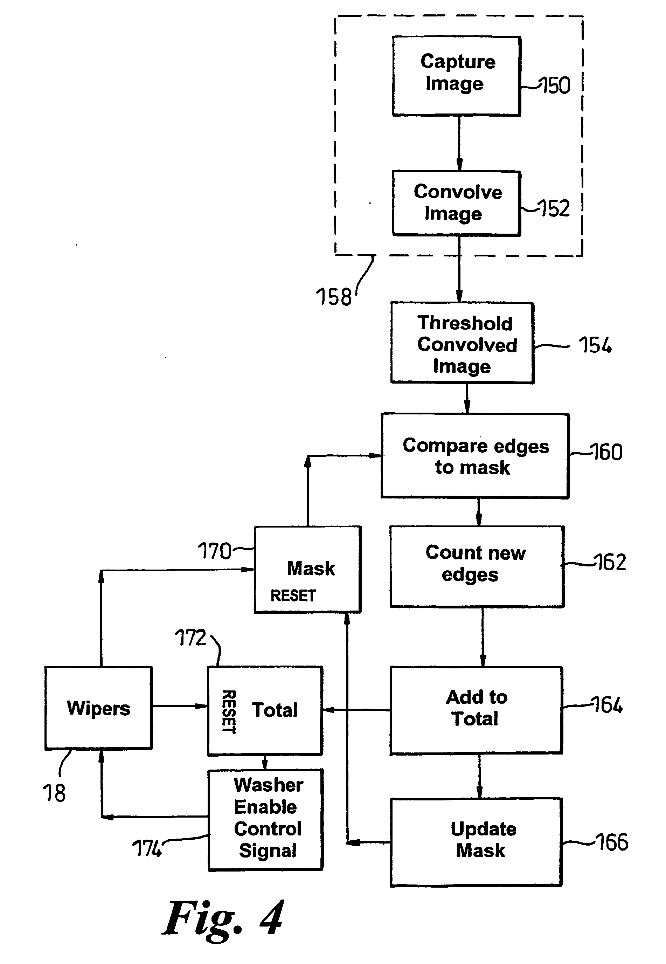

In an alternative embodiment, the first method of determining the amount of rain on the windscreen is replaced by a second method depicted in Figure 4. Steps equivalent to those in the first method have been indicated by the same numeral increased by 50.

In this method, the images are periodically captured 150, convolved and thresholded 154 as in the first method. The resultant edges are then compared 160 to a mask 170 stored in a memory 13 associated with the processor 12. The mask 170 indicates which part of the scene is already considered to be an edge of a raindrop, and so initially the mask 170 will be blank. The comparison hence shows the raindrops which have formed edges since the mask 170 was last updated. The number of these new edges is counted 162 and added 164 to a running total 172. This total 172 will initially be zero.

The mask is then updated 166 by dilating the new edges by a dilation amount of, say, 5 pixels and marking the dilated edges on the mask 170 as having been seen. This is a reasonable compromise between mistaking old edges that have simply moved slightly with respect to the camera 10 as new edges and mistakenly ignoring new edges that form. Of course, this dilation amount can be varied to achieve the best results.

The method then repeats with the next image captured 150 from the camera using the updated mask 170 and total 172. It can be seen that the total will never decrease merely from adding the number of new edges. Accordingly, it is necessary to reset the total 172 and mask 170 when a signal from the wipers 18 indicates the screen is freshly wiped. Alternatively, the first method may be employed to give a reading of total number of edges visible and the total 172 and mask 170 could be reset if a large, sudden, decrease in the total number of edges according to the first method was seen.

To estimate the amount of rain on the windscreen, it is possible to use the total number of edges from either method. Additionally the number of new edges in each image as calculated by the second method can be used as an indication of the rate of fall of rain. When a prescribed or adapted threshold number of edges is reached, an enabling control signal 174 may be generated causing the wash/wipe cleaning apparatus to be activated to sweep and clean the windscreen.

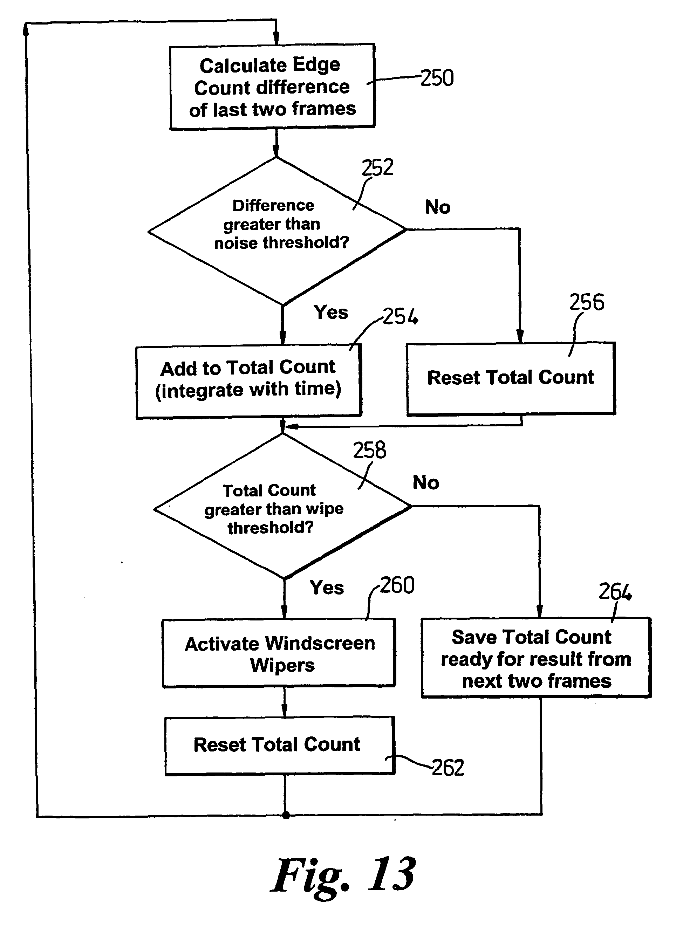

In a preferred alternative depicted in Figure 13 of the accompanying drawings, the number of edges is integrated over times such that small amounts of rain are cleaned off the windscreen after a maximum period. The number of edges for a given frame is counted 250 according to any of the methods described above. If this value is greater than a predetermined "noise" threshold 252, then the number of edges is added 254 to a running total. If not, the running total is reset to zero 256. If the running total exceeds a predetermined "wipe" threshold 258, the wipers are activated 260 and the running total reset 262. Otherwise, the running total is kept 264 for the next captured image. The method then repeats.

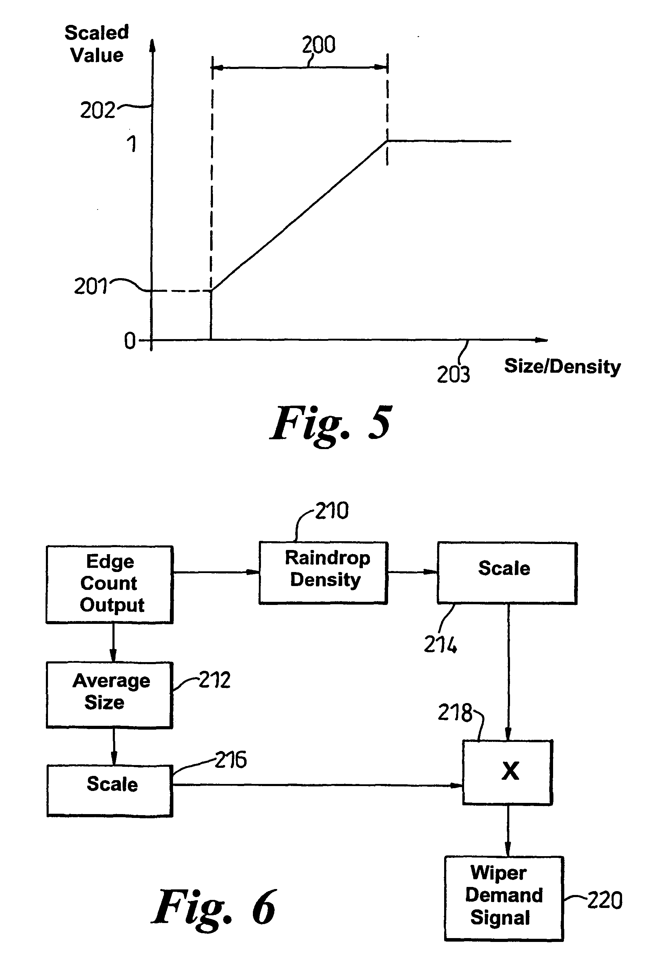

In a further optional refinement, the processor 12 may then use these aforementioned outputs to calculate average size 210 and density 212 of raindrops on the windscreen 16, as shown in Figure 6. These are then each scaled 214,216 to give a value between 0 and 1 according to Figure 5. Below a certain range 200 of raindrop size or density 203 the scaled value 202 is constantly zero; above the range 200 the scaled value 202 is constantly 1; and within the range 200 the scaled value 202 increases linearly with raindrop size or density 203 from a minimum scaled value 201 (which is between 0 and 1) to 1. These two scaled values are multiplied together 218 to give a wiper demand signal 220 between 0 and 1 This signal 220 indicates the fraction of maximum wiper speed at which the wipers 18 should run, where 0 is no wiper action and 1 indicates maximum speed, providing for the wipers 18 only operating above a certain threshold of both size 210 and density 212 of raindrops.

The method used in this system is advantageously combined with a vehicle lane and object detection system as the steps of capturing 100, 150 and convolving 102, 152 images (grouped as 108 and 158 in Figures 3 and 4) are already performed by such a detection system and hence the addition of a rain drop detection system as described herein does not unduly increase computational requirements. As to the choice between first and second methods, the first method requires less computational power and memory. However, it will produce much noisier results as raindrops shift with vehicle vibrations and so on, and as the unfocused scene behind the windscreen changes. As the second method uses an Edge Boundary Masking algorithm, it is less affected by these problems but requires more in the way of memory 13 and processor 12 use.

It is also appreciated that whilst with the cameras which are envisaged to be used in this system will not clearly capture the image of a passing wiper 18 and so the system will not recognised as an edge. However, cameras that are capable of sharply capturing moving wipers may be used in which case correction must be made such that the wiper edges are not unduly counted.

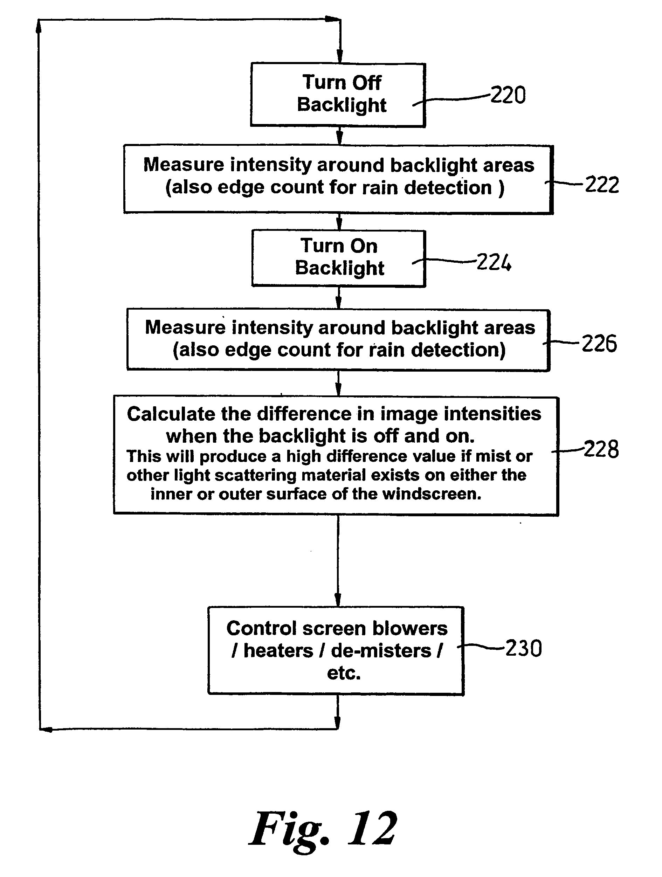

In another improvement, the system is adapted to detect the presence of mist on the windscreen. This can be demonstrated with reference to Figures 8a to 8c of the accompanying drawings, which depict views captured from the camera 10, and Figure 12 of the accompanying drawings, which show the steps taken. In normal view, without the backlight illuminated 220 (Figure 8a of the accompany drawings), the camera views the background scene and any raindrops on the windscreen. The average intensity surrounding the specular reflections of the backlight is measured 222. The backlight 21 is then turned on 224. In the lack of mist, illuminating the backlight 21 (Figure 8b of the accompanying drawings) does not have any great effect on the average intensity surrounding the specular reflections 53 of the backlight. However, if mist is present (Figure 8c of the accompanying drawings) then large amounts of diffuse, non-specular, reflection occur, and the intensity in the region surrounding the specular reflections of the backlight is greatly increased. Therefore, if the average intensity around the specular reflections 53 is calculated 226 and the difference between the two measured average intensities taken 228, the presence of mist can be detected as a large difference. This can then be monitored by the system, which can activate 230 demisting heaters, blowers and so on as appropriate.

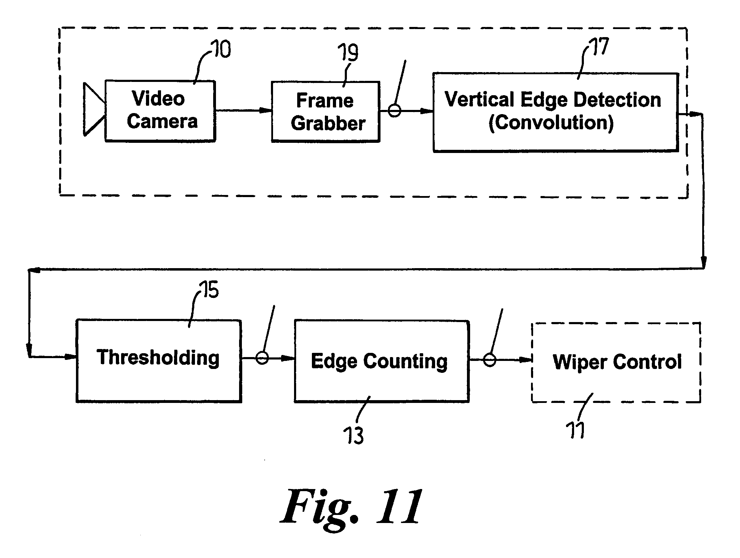

Figure 11 of the accompanying drawings shows how the system herein described is advantageously used in combination with a lane detection technique. The video camera 10, the frame grabber 19 (that part of the processor 12 adapted to capture images from the camera 10) and the vertical edge detection 17 are all identical for both the rain detection technique described herein and a lane detection technique. The same processor may therefore run the same instructions on the same data. Only the thresholding 15, edge counting 13 and wiper control 11 add to the processing and hardware requirements.

## Claims

1. A rain detection apparatus, comprising a camera (10) adapted to view a surface (16) and a processor (12) adapted to capture at least one image from the camera, in which the processor (12) is adapted to generate at least one signal indicative of the presence of rain on the surface (16) from information contained in the at least one captured image, **characterised in that** the processor (12) includes edge detection means adapted to detect edges visible in the at least one captured image and difference means adapted to calculate the difference between the number of edges visible between differing images.

2. The apparatus of claim 1 in which the apparatus is adapted to capture images focussed at a plurality of images.

3. The apparatus of claim 1 or claim 2, in which the edge detection is further adapted to disregard edges close to areas of light (53) larger than the largest raindrop that is desired or expected to be detected.

4. The apparatus of any preceding claim, further comprising a backlight (21) adapted to illuminate the surface.

5. The apparatus of claim 4 in which the backlight (21) is adapted to illuminate the surface (16) with a given range of frequencies, and in which the apparatus further comprises an optical bandpass filter (11) which preferentially allows the given range of frequencies to pass.

6. The apparatus of claim 4 or claim 5, in which the difference means calculates the difference between the numbers of edges visible in captured images with and without the backlight (21) illuminated.

7. The apparatus of any preceding claim, wherein the edge detection means is provided by convolving the image with a filter (51).

8. The apparatus of Claim 7, wherein the filter comprises a Sobel-like mask.

9. The apparatus of claim 7 when dependent on claim 3 in which the mask (51) comprises a central peak and two troughs spaced on either side of the central peak in convolution space.

10. The apparatus of claim 2 or any claim dependent thereon in which the camera is adapted to be focussed at a plurality of distances.

11. The apparatus of claim 10 in which the camera (10) is provided with a multi-focal lens (24).

12. The apparatus of any preceding claim, adapted to sense the location of other vehicles (44) or of lane markings (40) on a road (34) in which the vehicle to which the system is fitted is situated.

13. The apparatus of claim 6 or any claim dependent thereon in which the difference means is adapted to subtract the number of edges due to specular reflection of the backlight (21) on the surface (16) from the number of edges detected.

14. The apparatus of claim 4 or any claim dependent thereon, in which the apparatus is adapted to detect the presence of mist on the surface (16), in which the processor is adapted to calculate the difference in intensity of the captured image in the area around, but not including, the area of the image in which the specular reflection of the backlight (21) on the surface is found, between captured images in which the backlight (21) is illuminated and where it is not.

15. The apparatus of any preceding claim in which the surface is a vehicles window (16) or a cover or lens of a vehicle headlight.

16. An apparatus according to any preceding claim, adapted to control a cleaning apparatus (18, 20, 22) for a vehicle window (16) or a cover of a vehicle light.

17. A method of detecting the presence of obscurating material on a surface (16), the method comprising capturing images of the surface (16) and then calculating one or more characteristics of the condition of the surface (16) from the captured images, **characterised in that** the method includes the steps of detecting edges visible in the images and of taking the difference between the number of edges visible between differing images.

18. The method of claim 17 in which the method includes the step of capturing images focussed a plurality of distances.

19. The method of claim 17 or claim 18 in which the method includes the step of disregarding edges close to areas of light (53) larger than the largest raindrop that is desired or expected to be detected.

20. The method of any of claims 17 to 19, further including detecting the positions of lanes (40) or vehicles (44) surrounding a vehicle from information contained in the at least one captured image.

21. The method of any of claims 17 to 20 in which the method includes the steps of taking the difference between the numbers of edges visible between images captured with and without a backlight (21) illuminating the surface.

22. The method of any of claims 17 to 21 in which the surface comprises a vehicle window (16), or the cover for a light of a vehicle.

23. The method of any of claims 17 to 22, in which the at least one captured image is partially focussed on the vehicle window (16) and on the road (34) ahead of the vehicle.

24. The method of any of claims 17 to 23, in which the edges are detected by convolving the or each captured image with a mask (51).

25. The method of claim 24 in which the mask is a Sobel-like mask.

26. The method of claim 24 when dependent on claim 19 in which the mask (51) comprises a central peak and two troughs spaced in opposite directions in convolution space therefrom.

27. The method of claim 26 in which the peak and the troughs each have linear rising and falling edges.

28. The method of claim 26 or 27 in which at least one of the peak and the troughs have a constant maximum absolute value of non-zero width in convolution space.

29. The method of any one of claims 17 to 28, in which edges that are new compared with a previous image are counted.

30. The method of claim 21 or any claim dependent thereon, in which the number of edges due to specular reflection of the backlight (21) on the surface is also subtracted from the number of edges detected with the backlight (21) illuminated.

31. The method of any one of claims 17 to 30 further including the step of controlling vehicle window cleaning apparatus (18, 20, 22) according to the sensed vehicle window (16) condition.

32. The method of any one of claims 17 to 31 in which the amount of rain detected on the windscreen (16) is integrated over time, such that the amount of time that rain has been present on the surface (16) is taken into account.

33. The method of claim 32, further including the step of causing the surface (16) to be cleaned when the integrated value exceeds a predetermined limit.

34. The method of any one of claims 17 to 33, in which the method is further adapted to detect the presence of mist, the method further including the steps of calculating the difference in intensity of the captured image between images in which a backlight (21) is illuminated and where it is not in the area around, but not including, the area of the image in which the specular reflection of the backlight (21) is found.

## Patentansprüche

1. Regenerkennungsvorrichtung mit einer Kamera (10), die eine Fläche (16) zu betrachten vermag und einem Prozessor (12), der mindestens ein Bild von der Kamera zu erfassen vermag, bei der der Prozessor (12) mindestens ein das Vorhandensein von Regen auf der Fläche (16) anzeigendes Signal aus in dem mindestens einen erfassten Bild enthaltener Information zu erzeugen vermag, **dadurch gekennzeichnet, dass** der Prozessor (12) Randerkennungsmittel, die in dem mindestens einem erfassten Bild sichtbare Ränder zu erkennen vermögen, und Differenzbildungsmittel umfasst, die die Differenz der Anzahl der Ränder zu berechnen vermögen, die in unterschiedlichen Bildern sichtbar sind.

2. Vorrichtung nach Anspruch 1,
bei der die Vorrichtung Bilder zu erfassen vermag, die auf eine Mehrzahl von Entfernungen fokussiert sind.

3. Vorrichtung nach Anspruch 1 oder Anspruch 2,
bei der die Randerkennung ferner Ränder zu ignorieren vermag, die sich nahe an Lichtbereichen (53) befinden, die größer als der größte erkannt zu werden gewünschte oder erwartete Regentropfen sind.

4. Vorrichtung nach einem der vorhergehenden Ansprüche,
ferner umfassend eine Hintergrundbeleuchtung (21), die die Fläche zu beleuchten vermag.

5. Vorrichtung nach Anspruch 4,
bei der die Hintergrundbeleuchtung (21) die Fläche (16) mit einem vorgegebenen Frequenzbereich zu beleuchten vermag und bei der die Vorrichtung ferner einen optischen Bandpassfilter (11) umfasst, der vorwiegend dem gegebenen Frequenzbereich ein Passieren ermöglicht.

6. Vorrichtung nach Anspruch 4 oder Anspruch 5,
bei der die Differenzbildungsmittel den Unterschied der in mit und ohne angeschalteter Hintergrundbeleuchtung (21) erfassten Bildern sichtbaren Anzahl der Ränder berechnet.

7. Vorrichtung nach einem der vorhergehenden Ansprüche,
bei der die Randerkennungsmittel durch Falten des Bildes mit einem Filter (51) bereitgestellt sind.

8. Vorrichtung nach Anspruch 7,
bei der der Filter eine Sobelartige Maske umfasst.

9. Vorrichtung nach Anspruch 7 in Abhängigkeit von Anspruch 3,
bei der die Maske (51) eine zentrale Erhöhung und zwei Mulden umfasst, die auf jeder Seite der zentralen Erhöhung im Faltungsraum beabstandet sind.

10. Vorrichtung nach Anspruch 2 oder jedem davon abhängigen Anspruch,
bei der die Kamera auf eine Mehrzahl von Entfernungen fokussiert zu werden vermag.

11. Vorrichtung nach Anspruch 10,
bei der die Kamera (10) mit einem multifokalen Objektiv (24) versehen ist.

12. Vorrichtung nach einem der vorhergehenden Ansprüche,
die es vermag, die Position anderer Fahrzeuge (44) oder von Fahrbahnmarkierungen (40) auf einer Straße (34) wahrzunehmen, auf der sich das Fahrzeug befindet, in das das System eingebaut ist.

13. Vorrichtung nach Anspruch 6 oder jedem davon abhängigen Anspruch,
bei der die Differenzbildungsmittel dazu ausgebildet sind, die Anzahl der Ränder aufgrund gespiegelter Reflexion der Hintergrundbeleuchtung (21) auf der Fläche (16) von der Anzahl erkannter Ränder abzuziehen.

14. Vorrichtung nach Anspruch 4 oder jedem davon abhängigen Anspruch,
bei der die Vorrichtung das Vorhandensein von Beschlag auf der Fläche (16) zu erkennen vermag, und bei der der Prozessor den Intensitätsunterschied des erfassten Bildes in dem Bereich um, aber nicht einschließlich des Bildbereichs, in dem die gespiegelte Reflexion der Hintergrundbeleuchtung (21) auf der Fläche stattfindet, zwischen erfassten Bildern, bei denen die Hintergrundbeleuchtung (21) angeschaltet ist und bei denen dies nicht der Fall ist, zu berechnen vermag.

15. Vorrichtung nach einem der vorhergehenden Ansprüche,
bei der die Fläche ein Fahrzeugfenster (16) oder eine Abdeckung oder Linse eines Fahrzeugfrontscheinwerfers ist.

16. Vorrichtung nach einem der vorhergehenden Ansprüche,
die eine Reinigungsvorrichtung (18, 20, 22) für ein Fahrzeugfenster (16) oder eine Abdeckung eines Fahrzeugscheinwerfers zu steuern vermag.

17. Verfahren zum Erkennen des Vorhandenseins durchblickhemmenden Materials auf einer Fläche (16), wobei das Verfahren das Erfassen von Bildern der Fläche (16) und dann das Berechnen einer oder mehrerer Eigenschaften des Zustands der Fläche (16) aus den erfassten Bildern umfasst, **dadurch gekennzeichnet, dass** das Verfahren die Schritte des Erkennens von auf den Bildern sichtbarer Ränder und das Bilden der Differenz zwischen der Anzahl der sich in unterscheidenden Bildern sichtbaren Ränder beinhaltet.

18. Verfahren nach Anspruch 17,
bei dem das Verfahren den Schritt des Erfassens von Bildern umfasst, die auf eine Mehrzahl von Entfernungen fokussiert sind.

19. Verfahren nach Anspruch 17 oder Anspruch 18,
bei dem das Verfahren den Schritt des Ignorierens von Rändern beinhaltet, die sich nahe an Lichtbereichen (53) befinden, die größer als der größte erkannt zu werden gewünschte oder erwartete Regentropfen sind.

20. Verfahren nach einem der Ansprüche 17 bis 19,
ferner umfassend das Erkennen der Position von ein Fahrzeug umgebenden Fahrstreifen (40) oder Fahrzeugen (44) aus in dem mindestens einen erfassten Bild enthaltener Information.

21. Verfahren nach einem der Ansprüche 17 bis 20,
bei dem das Verfahren die Schritte des Bildens der Differenz zwischen der Anzahl sichtbarer Ränder in Bildern beinhaltet, die mit und ohne eine die Fläche beleuchtende Hintergrundbeleuchtung (21) erfasst wurden.

22. Verfahren nach einem der Ansprüche 17 bis 21,
bei dem die Fläche ein Fahrzeugfenster (16) oder die Abdeckung für einen Fahrzeugscheinwerfer umfasst.

23. Verfahren nach einem der Ansprüche 17 bis 22,
bei dem mindestens ein erfasstes Bild teilweise auf das Fahrzeugfenster (16) und auf die Straße (34) vor dem Fahrzeug fokussiert ist.

24. Verfahren nach einem der Ansprüche 17 bis 23,
bei dem die Ränder durch Falten des oder jedes erfassten Bildes mit einer Maske (51) erkannt werden.

25. Verfahren nach Anspruch 24,
bei dem die Maske eine Sobelartige Maske ist.

26. Verfahren nach Anspruch 24 in Abhängigkeit von Anspruch 19,
bei dem die Maske (51) eine zentrale Erhöhung und zwei Mulden umfasst, die von ihr im Faltungsraum in entgegengesetzten Richtungen beabstandet sind.

27. Verfahren nach Anspruch 26,
bei dem die Erhöhung und die Mulden jeweils linear ansteigende und fallende Ränder haben.

28. Verfahren nach Anspruch 26 oder 27,
bei dem wenigstens die Erhöhung oder die Mulden einen konstanten maximalen Absolutwert einer Breite ungleich Null im Faltungsraum haben.

29. Verfahren nach einem der Ansprüche 17 bis 28,
bei dem Ränder gezählt werden, die verglichen mit einem vorhergehenden Bild neu sind.

30. Verfahren nach Anspruch 21 oder jedem davon abhängigen Anspruch,
bei dem die Anzahl der Ränder aufgrund gespiegelter Reflexion der Hintergrundbeleuchtung (21) auf der Fläche auch von der Anzahl der Ränder abgezogen wird, die mit angeschalteter Hintergrundbeleuchtung (21) erkannt wurden.

31. Verfahren nach einem der Ansprüche 17 bis 30,
ferner umfassend den Schritt des Steuerns einer Fahrzeugfensterreinigungsvorrichtung (18, 20, 22) gemäß dem wahrgenommenen Zustand des Fahrzeugfensters (16).

32. Verfahren nach einem der Ansprüche 17 bis 31,
bei dem die Menge des auf der Windschutzscheibe (16) erkannten Regens über die Zeit integriert wird, so dass die Zeitdauer, während der Regen auf der Fläche (16) vorhanden war, berücksichtigt wird.

33. Verfahren nach Anspruch 32,
ferner umfassend den Schritt des Veranlassens der Säuberung der Fläche (16), wenn der integrierte Wert eine vorgegebene Grenze übersteigt.

34. Verfahren nach einem der Ansprüche 17 bis 33,
bei dem das Verfahren ferner das Vorhandensein von Beschlag zu erkennen vermag, wobei das Verfahren ferner die Schritte des Berechnens des Intensitätsunterschieds des erfassten Bilds zwischen Bildern, bei denen eine Hintergrundbeleuchtung (21) eingeschaltet ist und bei denen sie es nicht ist, in dem Bereich um, aber nicht einschließlich des Bereichs des Bildes umfasst, in dem die gespiegelte Reflexion der Hintergrundbeleuchtung (21) stattfindet.

## Revendications

1. Appareil de détection de pluie, comprenant une caméra (10) adaptée pour observer une surface (16) et un processeur (12) adapté pour capturer au moins une image de la caméra, dans lequel le processeur (12) est adapté pour générer au moins un signal indiquant la présence de la pluie sur la surface (16) à partir de l'information contenue dans la au moins une image capturée, **caractérisé en ce que** le processeur (12) comprend des moyens de détection de bord adaptés pour détecter des bords visibles dans la au moins une image capturée et des moyens de différence adaptés pour calculer la différence entre le nombre de bords visibles entre les différentes images.

2. Appareil selon la revendication 1, dans lequel l'appareil est adapté pour capturer des images concentrées sur une pluralité de distances.

3. Appareil selon la revendication 1 ou la revendication 2, dans lequel la détection de bord est en outre adaptée pour ne pas tenir compte des bords à proximité des zones de lumière (53) supérieurs à la plus grosse goutte de pluie que l'on souhaite ou que l'on s'attend à détecter.

4. Appareil selon l'une quelconque des revendications précédentes, comprenant en outre un rétroéclairage (21) adapté pour éclairer la surface.

5. Appareil selon la revendication 4, dans lequel le rétro-élairage (21) est adapté pour éclairer la surface (16) dans une plage donnée de fréquences, et dans lequel l'appareil comprend en outre un filtre de bande passante optique (11) qui permet de préférence le passage de la plage donnée de fréquences.

6. Appareil selon la revendication 4 ou la revendication 5, dans lequel les moyens de différence calculent la différence entre le nombre de bords visibles dans les images capturées avec et sans le rétroéclairage (21) éclairé.

7. Appareil selon l'une quelconque des revendications précédentes, dans lequel les moyens de détection de bord sont prévus en convolutant une image avec un filtre (51).

8. Appareil selon la revendication 7, dans lequel le filtre comprend un masque de type Sobel.

9. Appareil selon la revendication 7 lorsqu'elle dépend de la revendication 3, dans lequel le masque (51) comprend un pic central et deux creux espacés de chaque côté du pic central dans l'espace de convolution.

10. Appareil selon la revendication 2 ou l'une quelconque des revendications dépendant de celles-ci, dans lequel la caméra est adaptée pour être concentrée sur une pluralité de distances.

11. Appareil selon la revendication 10, dans lequel la caméra (10) est dotée d'une lentille multifocale (24).

12. Appareil selon l'une quelconque des revendications précédentes, adapté pour détecter l'emplacement des autres véhicules (44) ou des marquages de voie (40) sur une route (34) sur laquelle le véhicule sur lequel le système est monté, est situé.

13. Appareil selon la revendication 6 ou l'une quelconque des revendications dépendant de celle-ci, dans lequel les moyens de différence sont adaptés pour soustraire le nombre de bords dus à la réflexion spéculaire du rétroéclairage (21) sur la surface (16) du nombre de bords détecté.

14. Appareil selon la revendication 4 ou l'une quelconque des revendications dépendant de celle-ci, dans lequel l'appareil est adapté pour détecter la présence de brouillard sur la surface (16), dans lequel le processeur est adapté pour calculer la différence d'intensité de l'image capturée dans la zone autour, mais ne comprenant pas la zone de l'image dans laquelle on trouve la réflexion spéculaire du rétro-élairage (21) sur la surface, entre les images capturées dans lesquelles le rétroéclairage (21) est éclairé et lorsqu'il ne l'est pas.

15. Appareil selon l'une quelconque des revendications précédentes, dans lequel la surface est une vitre de véhicule (16) ou un couvercle ou la lentille d'un phare de véhicule.

16. Appareil selon l'une quelconque des revendications précédentes, adapté pour contrôler un appareil de nettoyage (18, 20, 22) pour une vitre de véhicule (16) ou un couvercle d'un phare de véhicule.

17. Procédé pour détecter la présence d'un matériau obscurcissant sur une surface (16), le procédé comprenant l'étape consistant à capturer des images de la surface (16) et à calculer ensuite une ou plusieurs caractéristiques de l'état de la surface (16) à partir des images capturées, **caractérisé en ce que** le procédé comprend les étapes consistant à détecter des bords visibles sur les images et à prendre la différence entre le nombre de bords visibles entre les différentes images.

18. Procédé selon la revendication 17, dans lequel le procédé comprend l'étape consistant à capturer les images concentrées sur une pluralité de distances.

19. Procédé selon la revendication 17 ou la revendication 18, dans lequel le procédé comprend l'étape consistant à ne pas tenir compte des bords à proximité des zones de lumière (53) supérieurs à la plus grosse goutte de pluie que l'on souhaite ou que l'on s'attend à détecter.

20. Procédé selon l'une quelconque des revendications 17 à 19, comprenant en outre l'étape consistant à détecter la position des voies (40) ou des véhicules (44) entourant un véhicule d'après l'information contenue dans la au moins une image capturée.

21. Procédé selon l'une quelconque des revendications 17 à 20, dans lequel le procédé comprend les étapes consistant à prendre la différence entre le nombre de bords visibles entre les images capturées avec et sans rétroéclairage (21) éclairant la surface.

22. Procédé selon l'une quelconque des revendications 17 à 21, dans lequel la surface comprend une vitre de véhicule (16), ou le couvercle pour un phare d'un véhicule.

23. Procédé selon l'une quelconque des revendications 17 à 22, dans lequel la au moins une image capturée est partiellement concentrée sur la vitre de véhicule (16) et sur la route (34) devant le véhicule.

24. Procédé selon l'une quelconque des revendications 17 à 23, dans lequel les bords sont détectés en convolutant la ou chaque image capturée avec un masque (51).

25. Procédé selon la revendication 24, dans lequel le masque est un masque de type Sobel.

26. Procédé selon la revendication 24, lorsqu'elle dépend de la revendication 19, dans lequel le masque (51) comprend un pic central et deux creux espacés dans les directions opposées, à partir d'un espace de convolution.

27. Procédé selon la revendication 26, dans lequel le pic et les creux ont chacun des bords montant et descendant linéaires.

28. Procédé selon la revendication 26 ou 27, dans lequel au moins l'un parmi le pic et les creux ont une valeur absolue maximum constante de largeur différente de zéro dans l'espace de convolution.

29. Procédé selon l'une quelconque des revendications 17 à 28, dans lequel les bords qui sont nouvellement comparés avec une image précédente, sont comptés.

30. Procédé selon la revendication 21 ou l'une quelconque des revendications dépendant de celle-ci, dans lequel le nombre de bords dus à la réflexion spéculaire du rétroéclairage (21) sur la surface est également soustrait du nombre de bords détectés avec le rétroéclairage (21) éclairé.

31. Procédé selon l'une quelconque des revendications 17 à 30, comprenant en outre l'étape consistant à contrôler l'appareil de nettoyage de vitres de véhicule (18, 20, 22) selon un état détecté de la vitre (16) de véhicule.

32. Procédé selon l'une quelconque des revendications 17 à 31, dans lequel la quantité de pluie détectée sur le pare-brise (16) est intégrée dans le temps, de sorte que la quantité de temps pendant laquelle la pluie est présente sur la surface (16) est prise en compte.

33. Procédé selon la revendication 32, comprenant en outre l'étape consistant à amener la surface (16) à être nettoyée lorsque la valeur intégrée dépasse une limite prédéterminée.

34. Procédé selon l'une quelconque des revendications 17 à 33, dans lequel le procédé est en outre adapté pour détecter la présence du brouillard, le procédé comprend en outre les étapes consistant à calculer la différence d'intensité de l'image capturée entre les images dans lesquelles un rétroéclairage (21) est éclairé et lorsqu'il ne l'est pas dans la zone autour, mais ne comprenant pas la zone de l'image dans laquelle on trouve la réflexion spéculaire du rétroéclairage (21).
